# EUROPÄISCHE PATENTSCHRIFT

(11) **EP 2 946 459 B1**
(45) Veröffentlichungstag und Bekanntmachung des Hinweises auf die Patenterteilung: **13.01.2021**
(21) Anmeldenummer: 13791792.8
(22) Anmeldetag: 12.11.2013
(51) Int. Cl.: H02K 5/04, H02K 5/15, H02K 5/22

(54) **BEFESTIGUNGSVORRICHTUNG SOWIE VERFAHREN ZUM FIXIEREN EINER ELEKTRISCHEN MASCHINE AN EINEM BAUTEIL**
SECURING DEVICE AND METHOD FOR FIXING AN ELECTRIC MACHINE TO A COMPONENT
DISPOSITIF DE FIXATION ET PROCÉDÉ DE FIXATION D'UN MOTEUR ÉLECTRIQUE SUR UNE PIÈCE

(30) Priorität: 13.11.2012 DE 102012022112
(43) Veröffentlichungstag der Anmeldung: 25.11.2015
(73) Patentinhaber: Robert Bosch GmbH, 70442 Stuttgart (DE)
(72) Erfinder: BAUER, Bertram, 76571 Gaggenau (DE)
(86) Internationale Anmeldenummer: PCT/EP2013/073624
(87) Internationale Veröffentlichungsnummer: WO 2014/076083

(56) Entgegenhaltungen:
- EP-A2- 0 550 102
- DE-A1- 10 026 467
- US-A1- 2003 025 411

## Beschreibung

### Stand der Technik

Die Erfindung geht aus von einer Befestigungsplatte, einer Befestigungsvorrichtung, sowie einem Verfahren zum Fixieren einer elektrischen Maschine an einem Bauteil nach der Gattung der unabhängigen Ansprüche.

Mit der DE 10 2005 030 218 A1 ist eine Befestigungsvorrichtung bekannt geworden, bei der ein Adapterelement um eine Abtriebswelle eines Elektromotors angeordnet wird, um diesen beispielsweise in einer Automobilkarosserie zu befestigen. Dazu wird das zweiteilig ausgebildete Adapterelement radial auf einen axialen Fortsatz des Elektromotors gefügt. Der axiale Fortsatz ist Bestandteil eines Lagerschildes und weist in seinem radial äußeren Umfang einen Formschluss auf, der ein Verdrehen des Adapterelements gegenüber dem Elektromotor verhindert. Um die Abtriebswelle des Elektromotors exakt gegenüber der KfZ-Karosserie zu positionieren, sind sehr hohe Ansprüche an die Fertigung des Adapterelements zu stellen. Insbesondere bei veränderlichen Umgebungstemperaturen ist trotzdem keine dauerhaft exakte Positionierung gewährleistet.

Mit der EP 0550102 A2 ist eine Befestigungsplatte zur Fixierung einer elektrischen Maschine bekannt geworden, bei der eine zentrale Durchgangsöffnung zur Aufnahme eines runden Gehäuseteils ausgebildet ist.

Die US 2003/025411 A1 zeigt eine Vorrichtung zum Verbinden eines Elektromotors mit einem Getriebegehäuse, die eine zentrale Öffnung aufweist, die eine näherungsweise vieleckige Form aufweist.

### Offenbarung der Erfindung

### Vorteile der Erfindung

Die erfindungsgemäße Befestigungsplatte und die Befestigungsvorrichtung, sowie das Verfahren zum Befestigen einer elektrischen Maschine mit den Merkmalen der unabhängigen Ansprüche haben demgegenüber den Vorteil, dass durch die Ausbildung einer Befestigungsplatte mit einer zentralen Aufnahmeöffnung für den axialen Fortsatz des Lagerschilds des Elektromotors Lagerungstoleranzen auch über einen großen Temperaturbereich wirkungsvoll ausgeglichen werden können. Hierzu ist die Aufnahmeöffnung in Form eines Vielecks gebildet, das mit seinen Seitenflächen radial an den axialen Fortsatz der elektrischen Maschine gepresst wird. Mittels an der Befestigungsplatte ausgeformten Befestigungsaufnahmen kann die elektrische Maschine sehr platzsparend direkt an einem Kraftfahrzeugbauteil dauerhaft fixiert werden.

Durch die in den abhängigen Ansprüchen aufgeführten Maßnahmen sind vorteilhafte Weiterbildungen und Verbesserungen der in den unabhängigen Ansprüchen angegebenen Ausführungen möglich. Besonders vorteilhaft ist es, wenn die Befestigungsplatte als weitgehend ebene Metallplatte ausgebildet ist, in der die Aufnahmeöffnung als Durchbruch ausgestanzt ist. Diese Durchgangsöffnung ist vorteilhaft nicht rund, sondern als Vieleck ausgebildet, wobei insbesondere eine dreieckige oder viereckige oder fünfeckige oder sechseckige Form ausgeformt wird. Dadurch liegt der näherungsweise rund ausgebildete axiale Fortsatz der elektrischen Maschine nicht über den gesamten Umfang an der Aufnahmeöffnung an.

Dabei weist die eckige Durchgangsöffnung zweckmäßigerweise ebene Seitenflächen auf, die nur in einem in Axialrichtung linienförmigen Anlagebereich an den axialen Fortsatz der elektrischen Maschine anliegen. Hierbei ist der axiale Fortsatz bevorzugt als Lagerhülse ausgebildet, in der ein Lagerkörper - beispielsweise ein Wälzlager - der Abtriebswelle aufgenommen ist.

In einer bevorzugten Ausführung liegen nur exakt drei Seitenwände radial an der Lagerhülse an, da dann eine mechanische Überbestimmung der Radiallagerung vermieden wird. Dabei können beispielsweise weitere Seitenwände der Durchgangsöffnung radial nach außen versetzt angeordnet sein, so dass diese keinen Kontakt zu der Lagerhülse haben.

Um Fertigungstoleranzen zwischen der Durchgangsöffnung und der Lagerhülse auszugleichen, sind zumindest im Bereich der Anlagebereiche radial ausserhalb der Durchgangsöffnung sogenannte Deformationsaussparungen ausgeformt, die in gewissem Rahmen eine radiale Beweglichkeit der Anlagebereiche ermöglichen. Die Deformationsaussparungen erstrecken sich in tangentialer Richtung entlang der Seitenwände, so dass die Umfangswand der Durchgangsöffnung radial bewegliche Stege aufweist, die elastisch oder plastisch verformbar sind.

Um die Seitenwände radial beweglich auszubilden, weisen die Stege eine radiale Breite von 0,5 mm bis 3,0 mm auf, wobei sich eine Breite von ungefähr 1,0 mm als besonders günstig erwiesen hat. Dabei beträgt die axiale Dicke der Befestigungsplatte in Bereich der Stege idealerweise ebenfalls 0,5 bis 3,0 mm, bevorzugt ungefähr 1,0 mm. Durch die radial nachgiebig ausgebildeten Seitenwände der Aufnahmeöffnung kann eine Presspassung mit der Lagerhülse erzielt werden, ohne dass der Lagerkörper im Inneren der Lagerhülse von den äußeren Anpresskräften beeinflusst wird. Die radiale Beweglichkeit der Stege kann besonders einfach durch längliche Schlitze in der Befestigungsplatte realisiert werden, deren Ausdehnung in tangentialer Richtung größer ist, als deren radiale Abmessung, und näherungsweise entlang der geraden Seitenflächen ausgerichtet sind.

Zur einfachen Fixierung der elektrischen Maschine weist die Befestigungsplatte am äußeren Umfang Befestigungsaufnahmen auf, die bevorzugt radial ausserhalb den Abmessungen der elektrischen Maschine, insbesondere radial ausserhalb deren Polgehäuse liegen. Dadurch können Verbindungsmittel - wie Schrauben, Nieten, oder Biegelaschen - montiert werden, ohne dass diese mit dem Bauraum der elektrischen Maschine kollidieren.

Zusätzlich zu der Durchgangsöffnung und den Deformationsaussparungen sind in der Befestigungsplatte weitere Durchführungen ausgebildet, durch die beispielsweise elektrische Versorgungsleitungen der elektrischen Maschine geführt sind. Diese befinden sich bevorzugt radial ausserhalb der Deformationsaussparungen und werden bei der axialen Montage der Befestigungsplatte auf die Lagerhülse über die Kabelzuführungen geschoben. Zur eindeutigen Festlegungen der Drehlage der Befestigungsplatte gegenüber dem Gehäuse der elektrischen Maschine weist die Befestigungsplatte eine Drehsicherung auf, die als radialer und/oder axialer Fortsatz ausgebildet ist, der in eine entsprechende Gegenaufnahme im Gehäuse der elektrischen Maschine eingreift. Damit werden beispielsweise die Befestigungsaufnahmen und die Durchführungen für die elektrischen Kontakte in ihrer Drehlage eindeutig zum Gehäuse der elektrischen Maschine positioniert.

Die Befestigungsplatte ist Teil einer Befestigungsvorrichtung, bei der die Befestigungsplatte drehfest auf der Lagerhülse der elektrischen Maschine befestigt ist. Die Lagerhülse ist hierbei einstückig mit einem Lagerdeckel ausgebildet, der ein zylinderförmiges Polgehäuse der elektrischen Maschine abschließt. Die Lagerhülse nimmt in ihrem Inneren einen Lagerkörper auf, in dem die Abtriebswelle der elektrischen Maschine gelagert ist, die insbesondere identisch mit der Rotorwelle der elektrischen Maschine ausgebildet ist. Bei dieser Befestigungsvorrichtung kann vorzugsweise ein Wälzlager - beispielsweise ein Kugellager - derart innerhalb der Lagerhülse aufgenommen werden, dass der äußere Lagerring des Wälzlagers beim Aufpressen der Befestigungsplatte auf die Lagerhülse nicht beeinträchtigt wird.

Durch das erfindungsgemäße Befestigungsverfahren werden durch die radiale Verformung der Umfangswand der Durchgangsöffnung sowohl Fertigungstoleranzen, als auch thermische Ausdehnungen während des Betriebs, wirksam ausgeglichen. Durch die symmetrische Anordnung der Aufnahmebereiche der Seitenwände, bleibt das Abtriebsritzel bezüglich der Befestigungsaufnahmen immer sauber zentriert. Damit ist eine einfache und präzise Positionierung der elektrischen Maschine während aller Betriebszustände der elektrischen Maschine im Kraftfahrzeug gewährleistet.

Mit dieser Befestigungsvorrichtung kann beispielsweise eine elektrische Maschine im Kraftfahrzeug zuverlässig befestigt werden, die als Getriebe-Antriebseinheit für eine Verstellvorrichtung ausgebildet ist. Beispielsweise kann ein Sitzverstellantrieb, ein Fensterhebantrieb, ein Scheibenwischantrieb oder ein Drosselklappenversteller im Motorraum mittels der Befestigungsplatte zuverlässig an der Karosserie fixiert werden.

### Zeichnungen

In den Zeichnungen sind Ausführungsbeispiele der Befestigungsplatte, der Befestigungsvorrichtung und des erfindungsgemäßen Befestigungsverfahren dargestellt und in der nachfolgenden Beschreibung näher erläutert.

Es zeigen
- Figur 1: eine Draufsicht auf eine Befestigungsplatte,
- Figur 2: eine auf eine elektrische Maschine montierte Befestigungsplatte und
- Figur 3: einen Schnitt durch die Befestigungsvorrichtung gemäß Fig. 2

### Beschreibung der Ausführungsbeispiele

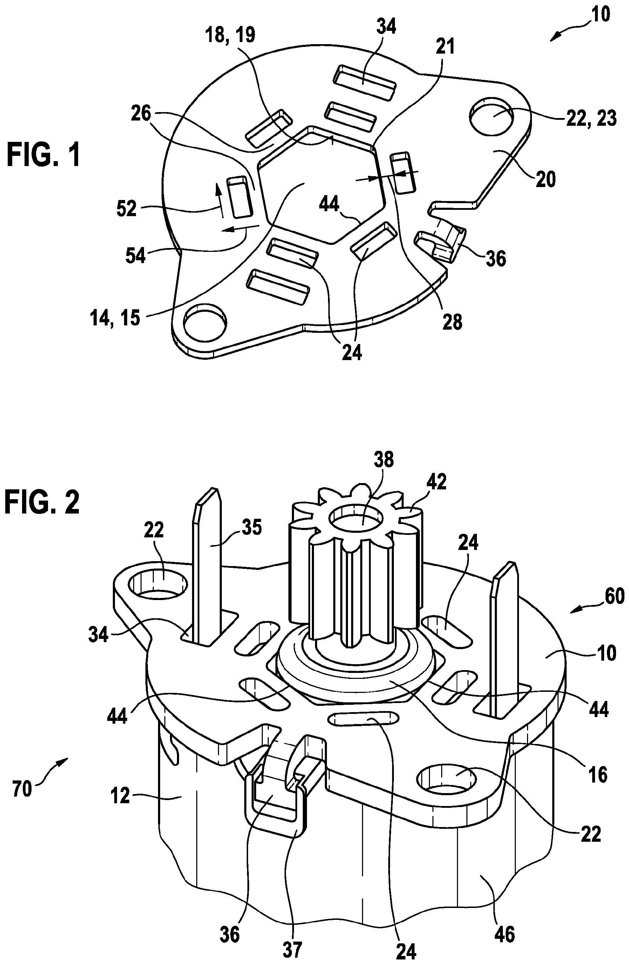

In Figur 1 ist eine Befestigungsplatte 10 dargestellt, die geeignet ist, eine elektrische Maschine 12 an einem Bauteil 30 - beispielsweise einer Kraftfahrzeug-Karosserie - zu befestigen. Die Befestigungsplatte 10 weist mittig eine Durchgangsöffnung 14 auf, in die ein axialer Fortsatz der elektrischen Maschine 12 einfügbar ist. Die Durchgangsöffnung 14 weist eben ausgebildete Seitenwände 18 auf, die nach der Montage radial an dem axialen Fortsatz anliegen, der beispielsweise als Lagerhülse 16 ausgebildet ist. Die einzelnen Seitenwände 18 sind über mehr oder weniger stark ausgebildete Ecken 21 miteinander verbunden. Somit ist die Durchgangsöffnung 14 näherungsweise als Vieleck oder Polygonzug ausgebildet, die beispielsweise abgerundete Ecken 21 aufweisen. In Figur 1 ist beispielsweise das Vieleck als Sechseck mit sechs ebenen Flächen 19 ausgebildet. Alternativ kann die Durchgangsöffnung 14 jedoch auch als Dreieck, Viereck oder Fünfeck ausgebildet sein. Radial ausserhalb der Seitenwände 18 sind Deformationsaussparungen 24 ausgebildet, die eine radiale Deformation der Seitenwände 18 erlauben, um Toleranzen bei der Aufnahme der Lagerhülse 16 auszugleichen. Die Deformationsaussparungen 24 sind in Tangentialrichtung 52 länger ausgebildet als in Radialrichtung 54, so dass die Seitenwände 18 als radial verformbare Stege 26 ausgebildet sind. Mit Deformationsaussparungen 24 sind hier als Schlitze ausgebildet, die näherungsweise parallel zu den Seitenflächen 18 verlaufen. Diese können jedoch auch eine abgerundete oder ovale Form aufweisen, wie dies beispielsweise in einer Variation in Figur 2 dargestellt ist. Die Stege 26 weisen bevorzugt eine radiale Breite 28 auf, die näherungsweise gleich ist, wie die axiale Dicke 32 der Befestigungsplatte 10 in Bereich der Stege 26. Zur Ausbildung der radialen Deformierbarkeit der Stege 26 weist die Breite 28 und die Dicke 32 etwa 1 mm auf, diese können aber auch je nach Anforderung im Bereich zwischen 0,5 und 3,0 mm liegen.

Im Ausführungsbeispiel der Figur 1 weist die Durchgangsöffnung 14 näherungsweise ein gleichförmiges Sechseck auf. In einer Variation kann jedoch jede zweite Seitenwände 18 radial nach außen versetzt sein, so dass nur die drei radial weiter innenliegenden Seitenwände 18 der sechseckigen Durchgangsöffnung 14 an der Lagerhülse 16 anliegen. Durch eine solche Lagerung der runden Lagerhülse 16 an nur drei eben ausgebildeten Flächen 19, kann eine mechanische Überbestimmung der Lagerung vermieden werden. Eine solche als ungleichmäßiges Sechseck ausgebildete Durchgangsöffnung 14 mit unterschiedlich langen Seitenwände 18 in Tangentialrichtung 52 benötigt beispielsweise weniger Fläche, als eine entsprechende dreieckige Durchgangsöffnung für eine Lagerhülse 16 mit gleichem Durchmesser.

Des Weiteren sind in der Befestigungsplatte 10 Durchführungen 34 für Anschlusselemente ausgebildet, durch die im montierten Zustand entsprechende Anschlüsse der elektrischen Maschine 12 geführt sind. Es sind in Figur 2 beispielsweise elektrische Kontakte 35 dargestellt, die als Stanzteile oder auch als Kabel ausgebildet sein können. Die elektrischen Kontakte 35 sind beispielsweise als Versorgungsleitungen oder als elektrische Signalleitungen der elektrischen Maschine 12 ausgebildet. Im radial äußeren Bereich 20 sind Befestigungsaufnahmen 22 für Verbindungsmittel zum Bauteil 30 ausgebildet. Die Befestigungsaufnahmen 22 sind im Ausführungsbeispiel als Ösen 23 direkt aus der Befestigungsplatte 10 ausgestanzt. Die Befestigungsaufnahmen 22 liegen im montierten Zustand radial ausserhalb des Gehäuses der elektrischen Maschine 12, so dass als Verbindungsmittel ungestört Schrauben oder Nieten in die Befestigungsaufnahmen 22 eingeführt werden können. Alternativ können die Befestigungsaufnahmen 22 auch als Stanzlaschen ausgebildet sein, die mittels plastischer Materialumformung mit dem Bauteil 30 verbindbar sind. Um die Befestigungsplatte 10 bezüglich der Tangentialrichtung 52 eindeutig an der elektrischen Maschine 12 zu fixieren, weist die Befestigungsplatte 10 eine Drehsicherung 36 auf, die mit einer Gegenaufnahme 37 der elektrischen Maschine 12 zusammen wirkt. Die Drehsicherung 36 ist hier als axial abgewinkelte Lasche ausgebildet, die in eine entsprechende Aufnahme im Gehäuse der elektrischen Maschine 12 eingreift. Die Drehsicherung 36 kann hierbei in Radialrichtung 54 oder Axialrichtung 50 einen Formschluss mit dem Gehäuse der elektrischen Maschine 12 bilden. Im Ausführungsbeispiel sind am axial äußeren Rand der Befestigungsplatte 10 genau zwei Befestigungsaufnahmen 22 ausgebildet. In einer Variation können jedoch auch drei oder vier Befestigungsaufnahmen 22 ausgebildet werden. Die Befestigungsplatte 10 ist als Metallblech ausgebildet, aus dem die jeweiligen Aussparungen ausgestanzt sind. Dabei können vorteilhaft alle Ausstanzungen in einem Arbeitsschritt ausgeformt werden, und gegebenenfalls bestimmte Bereiche - wie beispielsweise die Drehsicherung 36 oder die Befestigungsaufnahmen 22 - auch durch Umbiegen angeformt werden. In der näherungsweise kreisförmigen Befestigungsplatte 10 wird radial mittig die Durchgangsöffnung 14, hierzu radial versetzt die Deformationsaussparungen 24, hierzu radial versetzt die Durchführungen 34 für elektrische Kontakte 35 und hierzu radial versetzt die Befestigungsaufnahmen 22 ausgebildet.

In der Befestigungsvorrichtung 60 der Figur 2 ist eine Befestigungsplatte 10 gemäß Figur 1 auf die elektrische Maschine 12 aufgepresst. Hierbei liegen die eben ausgebildeten Flächen 19 ihr Durchgangsöffnung 14 mit Anlagenbereichen 44 radial an der rund ausgebildeten Lagerhülse 16 an. Dabei sind die Anlagebereiche 44 in Axialrichtung 50 näherungsweise linienförmig ausgebildet, so dass in der Draufsicht gemäß Figur 1 die ebenen Flächen 19 nur punktförmig radial gegen die runde Lagerhülse 16 gepresst werden. Beim Aufpressen der Befestigungsplatte 10 werden die verformbaren Stege 26 radial soweit nach außen verborgen, bis die Befestigungsplatte 10 beim Aufpressen axial an der elektrischen Maschine 12 anliegt. Dabei wird eine Presspassung zwischen der Durchgangsöffnung 14 und der Lagerhülse 16 gebildet, die die Befestigungsplatte 10 sicher auf der elektrischen Maschine 12 fixiert. Dabei ist die Breite 28 und die tangentiale Länge der Stege 26 derart dimensioniert, dass die radialen Anpresskräfte die Lagerhülse 16 nicht verformen. Dadurch wird der in der Lagerhülse 16 gelagerte Lagerkörper 40 in seiner Funktion nicht gestört. Im Lagerkörper 40 ist die Rotorwelle 38 der elektrischen Maschine 12 gelagert, auf der ein Abtriebselement 42 gelagert ist, das beispielsweise als Ritzel ausgebildet ist. Dieses Abtriebselement 42 treibt als zu verstellendes Teil beispielsweise eine Drosselklappe oder eine Sitzkomponete oder ein Fensterheber oder einen Scheibenwischer an. Eine solche Antriebseinheit 70 wird mittels - nicht dargestellten - Verbindungselementen, die in den Befestigungsaufnahmen 22 angeordnet werden, mit einem Bauteil 30 des Kraftfahrzeugs verbunden. Beispielsweise wird die Antriebseinheit 70 im Motorraum oder am Rahmen des Kraftfahrzeugs mittels der erfindungsgemäßen Befestigungsvorrichtung 60 zuverlässig positioniert.

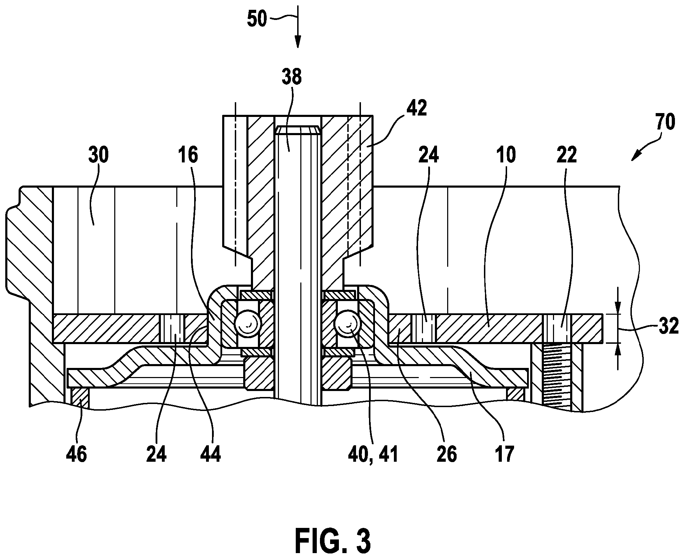

In Figur 3 ist die Antriebsvorrichtung 70 im Schnitt dargestellt, wobei ersichtlich ist, dass das Abtriebselement 42 am Ende der Abtriebswelle 38 aufgesteckt ist. Die Lagerhülse 16 ist einstückig mit dem Lagerdeckel 17 ausgebildet, der vorzugsweise als Biegestanzteil hergestellt ist. Der Lagerdeckel 17 ist beispielsweise am äußeren Umfang an einem Polgehäuse 46 der elektrischen Maschine 12 befestigt. Innerhalb des axialen Fortsatzes der Lagerhülse 16 ist der Lagerkörper 40 angeordnet, der die Abtriebswelle 38 aufnimmt, die hier identisch mit der Rotorwelle der elektrischen Maschine 12 ist. Der Lagerkörper 40 ist beispielsweise als Wälzlager - vorzugsweise als Kugellager 41 - ausgebildet. Der Aussenring des Kugellagers 41 ist dann im Inneren des als Lagerhülse 16 ausgebildeten axialen Fortsatzes eingepresst, wobei der Lagerinnenring auf der Abtriebswelle 38 befestigt ist. Beispielsweise ist der Lagerkörper 40 mittels plastischer Materialumformung des Lagerdeckels 17 axial in der Lagerhülse 16 fixiert. Die konkrete Anordnung und Ausführung der Befestigungsaufnahmen 22 an der Befestigungsplatte 10 können je nach Anwendung einfach abgeändert werden, ohne die Ausbildung der Durchgangsöffnung 14 an der Befestigungsplatte 10 zu verändern. Durch die Ausbildung von mindestens drei Anlagebereichen 44, die gleichmäßig über den Umfang verteilt angeordnet sind, ist immer eine exakte koaxiale Positionierung der Befestigungsplatte 10 zum Abtriebselement 42 gewährleistet. Die elektrische Maschine 12 ist beispielsweise als Elektromotor ausgebildet, bei dem im Polgehäuse 46 Permanentmagnete angeordnet sind, die den auf der Abtriebswelle 38 gelagerten Rotor antreiben.

Es sei angemerkt, dass hinsichtlich der in den Figuren und der Beschreibung gezeigten Ausführungsbeispiele vielfältige Kombinationsmöglichkeiten der einzelnen Merkmale unter einander möglich sind. So können beispielsweise konkrete Ausformungen der Durchgangsöffnung 14, sowie der Deformationsaussparung 24, der Durchführung 34 und der Befestigungsaufnahme 22 an die jeweilige Anwendung angepasst werden. Insbesondere wird die Breite 28 und die Dicke 32 der Stege 26 an die erforderlichen - beziehungsweise zulässigen - radialen Anpresskräfte gegenüber der Lagerhülse 16 angepasst. Bei der Ausführung der Durchgangsöffnung 14 sind nicht die Ecken 21 entscheidend sondern die Ausbildung der ebenen Seitenflächen 19 zwischen den Ecken 21 eines Polygonzuges.

## Patentansprüche

1. Befestigungsplatte (10) zur Fixierung einer elektrischen Maschine (12) - beispielsweise an einem Bauteil (30) im Kraftfahrzeug -, mit einer zentralen Durchgangsöffnung (14) zur Aufnahme einer runden, ein Wälzlager aufnehmenden Lagerhülse (16) der elektrischen Maschine (12), wobei die Befestigungsplatte (10) in einem radial äußeren Bereich (20) Befestigungsaufnahmen (22) aufweist, mittels derer die elektrische Maschine (12) an dem Bauteil (30) befestigbar ist, **dadurch gekennzeichnet, dass** die Durchgangsöffnung (14) eine näherungsweise vieleckige Form (15) mit Seitenwänden (18) aufweist, die an der Lagerhülse (16) zum Anliegen kommen,
wobei radial beabstandet zu den Seitenwänden (18) der Durchgangsöffnung (14) Deformationsaussparungen (24) angeordnet sind, aufgrund derer die Seitenwände (18) Bereiche aufweisen, die als radial verformbare Stege (26) ausgebildet sind,
wobei die Deformationsaussparungen (24) in Tangentialrichtung (52) länger ausgebildet sind als in Radialrichtung (54).

2. Befestigungsplatte (10) nach Anspruch 1, **dadurch gekennzeichnet,**
**dass** die vieleckige Form (15) als Dreieck oder als Viereck oder als Fünfeck oder als Sechseck ausgebildet ist, die insbesondere aus der als ebene Metallplatte ausgebildeten Befestigungsplatte (10) ausgestanzt ist.

3. Befestigungsplatte (10) nach Anspruch 1 oder 2, **dadurch gekennzeichnet, dass** die Seitenwände (18) als ebene Flächen (19) ausgebildet sind, die linienförmig in Axialrichtung (50) an der Lagerhülse (16) anliegen - und insbesondere eine Presspassung mit der Lagerhülse (16) bilden.

4. Befestigungsplatte (10) nach einem der vorhergehenden Ansprüche, **dadurch gekennzeichnet, dass** genau drei Seitenwänden (18) der Durchgangsöffnung (14) mit linienförmigen Anlagebereichen (44) an der Lagerhülse (16) anliegen, wobei insbesondere die Anlagebereiche (44) gleichmäßig über den Umfang verteilt angeordnet sind.

5. Befestigungsplatte (10) nach einem der vorhergehenden Ansprüche, **dadurch gekennzeichnet, dass** die radiale Breite (28) der Stege (26) in etwa der axialen Dicke (32) der Befestigungsplatte (10) entspricht - und insbesondere im Bereich zwischen 0,5 bis 3,0 mm, vorzugsweise bei etwa 1,0 mm liegt.

6. Befestigungsplatte (10) nach einem der vorhergehenden Ansprüche, **dadurch gekennzeichnet, dass** die Deformationsaussparungen (24) parallel zu den geraden Seitenwänden (18) verlaufen.

7. Befestigungsplatte (10) nach einem der vorhergehenden Ansprüche, **dadurch gekennzeichnet, dass** die Befestigungsaufnahmen (22) als Ösen (23) ausgebildet sind, die radial außerhalb der näherungsweisen kreisförmigen Grundform der Befestigungsplatte (10) - und in montiertem Zustand radial außerhalb der elektrischen Maschine (12) - liegen.

8. Befestigungsplatte (10) nach einem der vorhergehenden Ansprüche, **dadurch gekennzeichnet, dass** in der Befestigungsplatte (10) - insbesondere zwei - Durchführungen (34) für elektrische Kontakte (35) der elektrischen Maschine (12) ausgebildet sind, und die Befestigungsplatte (10) insbesondere eine Drehsicherung (36) aufweist, die in eine korrespondierende Gegenaufnahme (37) der elektrischen Maschine (12) greift, um die Drehlage der Befestigungsplatte (10) gegenüber der elektrischen Maschine (12) fest zu legen.

9. Befestigungsvorrichtung (60) mit einer Befestigungsplatte (10) nach einem der vorhergehenden Ansprüche, und einer elektrischen Maschine (12), **dadurch gekennzeichnet, dass** die Lagerhülse (16) einen Lagerkörper (40) einer Rotorwelle und/oder Abtriebswelle (38) umschließt, wobei der Lagerkörper (40) als Wälzlager - bevorzugt als Kugellager - ausgebildet ist, und insbesondere die Lagerhülse (16) einstückig mit einem Lagerdeckel (17) der elektrischen Maschine (12) - bevorzugt als Stanz-Tiefziehteil aus Metall - ausgebildet ist.

10. Befestigungsvorrichtung (60) nach Anspruch 9, **dadurch gekennzeichnet, dass** ein Außenring des Wälzlagers im Inneren eines als Lagerhülse (16) ausgebildeten axialen Fortsatzes eingepresst ist, wobei ein Lagerinnenring des Wälzlagers auf der Abtriebswelle (38) befestigt ist.

11. Verfahren zum Befestigen einer elektrischen Maschine (12) an einem Bauteil (30), insbesondere eines Kraftfahrzeugs, **dadurch gekennzeichnet, dass** nach der Herstellung der elektrischen Maschine (12) - insbesondere eines Elektromotors - eine Befestigungsplatte (10) nach einem der vorhergehenden Ansprüchen axial auf eine axial abstehende runde Lagerhülse (16) aufgepresst wird, wobei sich Seitenwände (18) der Durchgangsöffnung (14) an deren Anlagepunkten (44) an der Lagerhülse (16) radial elastisch und/oder plastisch verformen, und danach die Befestigungsaufnahmen (22) der Befestigungsplatte (10) - beispielsweise mittels Schrauben oder Nieten oder plastischer Materialumformung - mit dem Bauteil (30) verbunden werden, wodurch ein Abtriebselement (42) der elektrischen Maschine (12) relativ zu dem Bauteil (30 positioniert wird.

12. Antriebseinheit (70), insbesondere Getriebe-Antriebseinheit wie Sitzverstellantrieb, Fensterheberantrieb, Scheibenwischerantrieb oder Drosselklappensteller in einem Kraftfahrzeug mit einem ein Abtriebselement (42) aufweisenden Elektromotor (12), und einer Befestigungsvorrichtung (60) nach einem der vorhergehenden Ansprüche.

## Claims

1. Fastening plate (10) for fixing an electric machine (12), by way of example to a component (30) in the motor vehicle, said fastening plate having a central through-going orifice (14) for receiving a round bearing sleeve (16), which receives a roller bearing, of the electric machine (12), wherein the fastening plate (10) comprises fastening orifices (22) in a radially outer region (20) and the electric machine (12) can be fastened to the component (30) by means of said fastening orifices, **characterized in that** the through-going orifice (14) comprises an approximately polygonal shape (15) having lateral walls (18) that come to lie against the bearing sleeve (16), wherein deformation cut-outs (24) are arranged radially spaced apart from the lateral walls (18) of the through-going orifice (14) and as a result of this arrangement the lateral walls (18) comprise regions that are embodied as radially deformable connecting pieces (26), wherein the deformation cut-outs (24) are longer in the tangential direction (52) than in the radial direction (54).

2. Fastening plate (10) according to Claim 1, **characterized in that** the polygonal shape (15) is embodied as a triangle or as a rectangle or as a pentagon or as a hexagon that is punched out in particular from the fastening plate (10) that is embodied as a planar metal sheet.

3. Fastening plate (10) according to Claim 1 or 2, **characterized in that** the lateral walls (18) are embodied as planar surfaces (19) that lie in a linear manner in the axial direction (50) against the bearing sleeve (16) and form in particular a press-fit with the bearing sleeve (16).

4. Fastening plate (10) according to one of the preceding claims, **characterized in that** precisely three lateral walls (18) of the through-going orifice (14) lie with linear-shaped contact regions (44) against the bearing sleeve (16), wherein in particular the contact regions (44) are arranged distributed uniformly over the periphery.

5. Fastening plate (10) according to one of the preceding claims, **characterized in that** the radial width (28) of the connecting pieces (26) corresponds approximately to the axial thickness (32) of the fastening plate (10) and is in particular in the region between 0.5 to 3.0 mm, preferably approximately 1.0 mm.

6. Fastening plate (10) according to one of the preceding claims, **characterized in that** the deformation cut-outs (24) extend parallel to the straight lateral walls (18).

7. Fastening plate (10) according to one of the preceding claims, **characterized in that** the fastening orifices (22) are embodied as eyelets (23) that lie radially outside the approximately circular basic shape of the fastening plate (10) and in the assembled state lie radially outside the electric machine (12).

8. Fastening plate (10) according to one of the preceding claims, **characterized in that** through-going passages (34), in particular two through-going passages, are embodied for electrical contacts (35) of the electric machine (12) in the fastening plate (10) and the fastening plate (10) comprises in particular an antirotation device (36) that engages in a corresponding mating receiving device (37) of the electric machine (12) in order to fix the rotational position of the fastening plate (10) with respect to the electric machine (12).

9. Fastening device (60) having a fastening plate (10) according to one of the preceding claims, and an electric machine (12), **characterized in that** the bearing sleeve (16) comprises a bearing body (40) of a rotor shaft and/or output shaft (38), wherein the bearing body (40) is embodied as a roller bearing, preferably as a ball bearing, and in particular the bearing sleeve (16) is formed in one piece with a bearing lid (17) of the electric machine (12), preferably as a punched-out and deep-drawn metal part.

10. Fastening apparatus (60) according to Claim 9, **characterized in that** an outer ring of the ball bearing is pressed inside the axial extension that is embodied as the bearing sleeve (16), wherein a bearing inner ring of the roller bearing is fastened to the output shaft (38) .

11. Method for fastening an electric machine (12) to a component (30), in particular a component of a motor vehicle, **characterized in that** after the production of the electric machine (12), in particular an electric motor, a fastening plate (10) according to one of the preceding claims is pressed in an axial manner onto an axially protruding round bearing sleeve (16), wherein lateral walls (18) of the through-going orifice (14) deform radially in an elastic and/or plastic manner at the contact spots (44) of said through-going orifice on the bearing sleeve (16), and subsequently the fastening orifices (22) of the fastening plate (10) are connected to the component (30), by way of example by means of screws or rivets or material plastic deformation, as a result of which an output element (42) of the electric machine (12) is positioned relative to the component (30) .

12. Drive unit (70), in particular a geared drive unit such as a seat-adjusting drive, a window-operating drive, a windscreen washer drive or a throttle flap adjuster in a motor vehicle, said drive unit having an electric motor (12) that comprises an output element (42), and said drive unit having a fastening device (60) according to one of the preceding claims.

## Revendications

1. Plaque de fixation (10) pour la fixation d'une machine électrique (12) - par exemple à un composant (30) dans un véhicule automobile -, comprenant une ouverture de passage centrale (14) pour recevoir une douille palier ronde (16) de la machine électrique (12), recevant un palier à roulement, la plaque de fixation (10) présentant, dans une région radialement extérieure (20), des logements de fixation (22) au moyen desquels la machine électrique (12) peut être fixée au composant (30), **caractérisée en ce que** l'ouverture de passage (14) présente une forme approximativement polygonale (15) avec des parois latérales (18) qui viennent s'appliquer contre la douille palier (16),
des évidements de déformation (24) étant disposés de manière espacée radialement par rapport aux parois latérales (18) de l'ouverture de passage (14), du fait desquels les parois latérales (18) présentent des régions qui sont réalisées sous forme de nervures déformables radialement (26),
les évidements de déformation (24) étant réalisés de manière à être plus longs dans la direction tangentielle (52) que dans la direction radiale (54).

2. Plaque de fixation (10) selon la revendication 1, **caractérisée en ce que** la forme polygonale (15) est réalisée sous forme de triangle, de rectangle, de pentagone ou d'hexagone, laquelle est notamment estampée dans la plaque de fixation (10) réalisée sous forme de plaque métallique plane.

3. Plaque de fixation (10) selon la revendication 1 ou 2, **caractérisée en ce que** les parois latérales (18) sont réalisées sous forme de surfaces planes (19) qui s'appliquent sous forme linéaire dans la direction axiale (50) contre la douille palier (16) et notamment forment un ajustement par pressage avec la douille palier (16).

4. Plaque de fixation (10) selon l'une quelconque des revendications précédentes, **caractérisée en ce qu'**exactement trois parois latérales (18) de l'ouverture de passage (14) s'appliquent avec des régions d'application linéaire (44) contre la douille palier (16), en particulier les régions d'application (44) étant réparties de manière uniforme sur la périphérie.

5. Plaque de fixation (10) selon l'une quelconque des revendications précédentes, **caractérisée en ce que** la largeur radiale (28) des nervures (26) correspond approximativement à l'épaisseur axiale (32) de la plaque de fixation (10) - et notamment est comprise dans une plage de 0,5 à 3,0 mm, de préférence est d'environ 1,0 mm.

6. Plaque de fixation (10) selon l'une quelconque des revendications précédentes, **caractérisée en ce que** les évidements de déformation (24) s'étendent parallèlement aux parois latérales droites (18).

7. Plaque de fixation (10) selon l'une quelconque des revendications précédentes, **caractérisée en ce que** les logements de fixation (22) sont réalisés sous forme d'œillets (23) qui sont situés radialement à l'extérieur de la forme de base approximativement circulaire de la plaque de fixation (10) et, dans l'état monté, radialement à l'extérieur de la machine électrique (12).

8. Plaque de fixation (10) selon l'une quelconque des revendications précédentes, **caractérisée en ce que** des passages (34), en particulier deux passages, sont réalisés dans la plaque de fixation (10) pour des contacts électriques (35) de la machine électrique (12), et la plaque de fixation (10) présente notamment une fixation antirotation (36) qui s'engage dans un logement conjugué correspondant (37) de la machine électrique (12) afin de fixer la position en rotation de la plaque de fixation (10) par rapport à la machine électrique (12).

9. Dispositif de fixation (60) comprenant une plaque de fixation (10) selon l'une quelconque des revendications précédentes et une machine électrique (12), **caractérisé en ce que** la douille palier (16) entoure un corps de palier (40) d'un arbre de rotor et/ou d'un arbre de prise de force (38), le corps de palier (40) étant réalisé sous forme de palier à roulement, de préférence sous forme de roulement à billes, et en particulier la douille palier (16) étant réalisée d'une seule pièce avec un couvercle de palier (17) de la machine électrique (12), de préférence sous forme de pièce métallique emboutie profond.

10. Dispositif de fixation (60) selon la revendication 9, **caractérisé en ce qu'**une bague extérieure du palier à roulement est pressée à l'intérieur d'une saillie axiale réalisée sous forme de douille palier (16), une bague intérieure de palier du palier à roulement étant fixée sur l'arbre de prise de force (38).

11. Procédé de fixation d'une machine électrique (12) à un composant (30), en particulier d'un véhicule automobile, **caractérisé en ce qu'**après la fabrication de la machine électrique (12), en particulier d'un moteur électrique, une plaque de fixation (10) selon l'une quelconque des revendications précédentes est pressée axialement sur une douille palier ronde (16) saillant axialement, des parois latérales (18) de l'ouverture de passage (14) se déformant élastiquement et/ou plastiquement radialement au niveau de leurs points d'appui (44) contre la douille palier (16), puis les logements de fixation (22) de la plaque de fixation (10) étant connectés au composant (30), par exemple au moyen de vis ou de rivets ou d'une déformation plastique de matériau, de telle sorte qu'un élément de prise de force (42) de la machine électrique (12) soit positionné par rapport au composant (30).

12. Unité d'entraînement (70), notamment unité d'entraînement de transmission telle qu'un entraînement de réglage de siège, un entraînement de lève-glace, un entraînement d'essuie-glace ou un dispositif de réglage de papillon d'étranglement dans un véhicule automobile comprenant un moteur électrique (12) comprenant un élément de prise de force (42), et un dispositif de fixation (60) selon l'une quelconque des revendications précédentes.
